# EUROPEAN PATENT APPLICATION

(11) **EP 1 001 570 A2**
(43) Date of publication of application: **17.05.2000**
(21) Application number: 99308672.7
(22) Date of filing: 02.11.1999
(51) Int. Cl.: H04L 9/32

(54) **Efficient authentication with key update**

(30) Priority: 09.11.1998 US 188818
(71) Applicant: LUCENT TECHNOLOGIES INC., Murray Hill, New Jersey 07974-0636 (US)
(72) Inventor: Berenzweig, Adam L., New York, New York 10003 (US); Brathwaite, Carlos Enrique, Orangeny, New Jersey 07050 (US)
(74) Representative: Watts, Christopher Malcolm Kelway, Dr.

(57) **Abstract**

A more efficient method for performing authentication is provided by using an authentication challenge transmitted to a terminal to provide the terminal with the information to calculate authentication and cipher key values. As a result, a separate communication is not required to provide the terminal with key values. A visiting authentication center obtains a random value R_{T}, an authentication key value K_{A} and a cipher key value K_{C} from a home authentication center. The visiting authentication center then transmits the random number R_{T} to the terminal to update the terminal's authentication key and cipher key values, and to challenge the terminal as part of an authentication process. The terminal uses R_{T} to calculate the authentication key value K_{A} and the cipher key value K_{C}, and to respond to the visiting authentication center's challenge. In addition, the authentication key value is used to verify the visiting network's response to the terminal's authentication challenge to the network.

## Description

### Background of the Invention

### Field of the Invention

The present invention relates to communications; more specifically, the authentication of communicating parties in wireless communication systems.

### Description of the Related Art

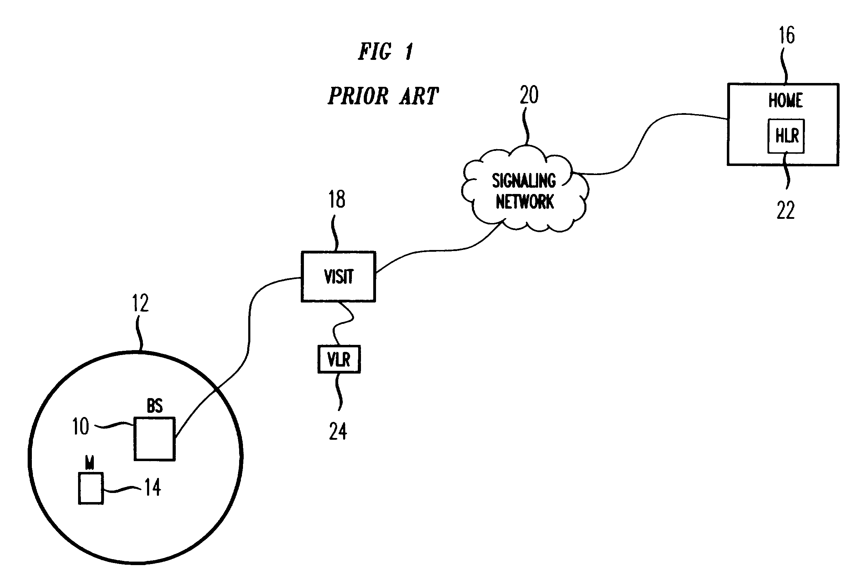

FIG. 1 illustrates a base station 10, its associated cell 12 and mobile 14 within cell 12. When mobile 14 first registers or attempts communications with base station 10, base station 10 authenticates or verifies the mobile's identity before allowing the mobile access to the communication network. When mobile 14 is in a network other than its home network, it is referred to as being in a visiting network. The home network is the network controlled by the service provider that has contracted with the mobile terminal's owner to provide wireless communication services. If the mobile is operating in a visiting communication network, the authentication of the mobile by base station 10 will involve communicating with authentication center 16 of the mobile's home network. In the example of FIG. 1, mobile 14 is in a visiting network. As a result, the authentication of mobile 14 involves communicating with authentication center 16 of the mobile's home network. When mobile 14 attempts to access the visitor network, base station 10 communicates with authentication center 18 of the visiting communication network. Authentication center 18 determines from a mobile or terminal identifier, such as the telephone number of mobile 14, that mobile 14 is registered with a network that uses home authentication center 16. Visiting authentication center 18 then communicates with home authentication center 16 over a network such as IS41 signaling network 20. Home authentication center 16 then accesses a home location register 22 which has a registration entry for mobile 14. Home location register 22 may be associated with the terminal or mobile by an identifier such as the mobile's telephone number. The information contained in the home location register is used to generate encryption keys and other information that is then supplied to visitor location register 24 of visitor authentication center 18. The information from visitor location register 24 is then used to supply base station 10 with information that is transmitted to mobile 14 so that mobile 14 can respond and thereby be authenticated as a mobile that is entitled to receive communication services.

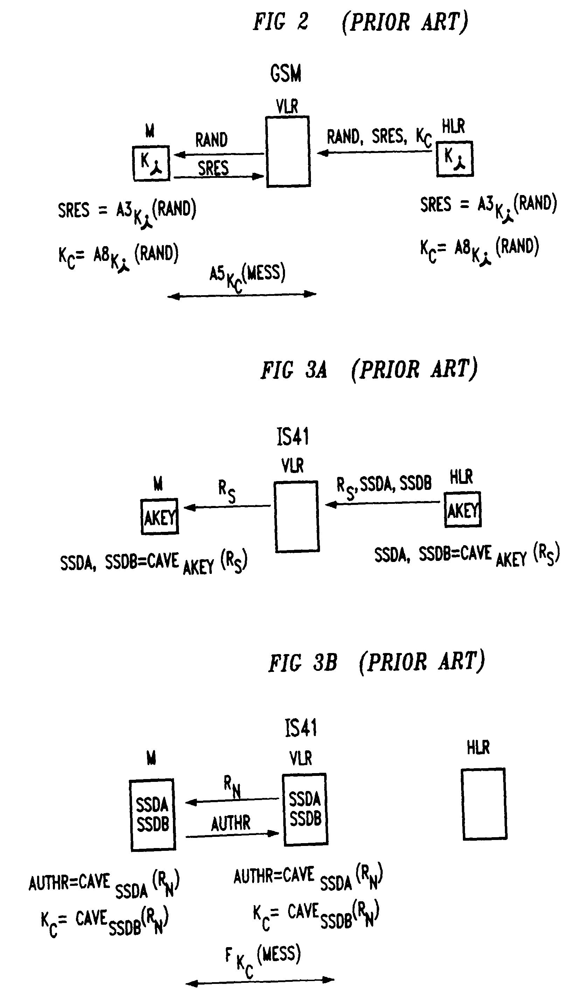

FIG. 2 illustrates the authentication procedure that is used in GSM wireless networks. In this case, both the mobile and home location register contain a key Kᵢ. When the mobile requests access to the visiting network, the visiting authentication center contacts the home authentication center to receive the variables RAND, SRES, and K_{C}. The home authentication center uses the value Kᵢ from the home location register associated with the mobile to generate the values SRES and K_{C}. The value SRES is calculated by using an cryptographic function known as A3 with a random number RAND as an input and the value Kᵢ as a key input. In a similar fashion, the cipher key K_{C} is calculated by using an cryptographic function A8 with RAND as an input and the value Kᵢ as a key input. These values are then transferred to the visitor location register of the visiting authentication center. The visiting authentication center then challenges the mobile by transmitting the random number RAND to the mobile. The mobile then calculates the values SRES and K_{C} in the same fashion as calculated by the home authentication center. The mobile then transmits the value SRES to the visiting authentication center where the visiting authentication center compares the received SRES from the mobile with the SRES received from the home authentication center. If the values match, the mobile is allowed access to the visiting network. If further communications between the mobile and visiting network are to be encrypted, they are encrypted using the A5 cryptographic function with the message to be encrypted as an input and with the key input equal to the value K_{C}. The cryptographic functions A3, A5 and A8 are well known in the art and are recommended by the GSM standard. In the GSM system, this authentication process, including the communication with the home authentication center, is carried out each time the mobile enters into a new call with the visiting network.

FIGS. 3a and 3b illustrate the'authentication process used for an IS41 compliant network. Examples of IS41 compliant networks are networks that use AMPS, TDMA or CDMA protocols. In this system, both the mobile and home location register contain a secret value called AKEY. When the mobile requests access to a visiting network, the visiting network authentication center requests data from the home authentication center. Before the actual authentication process can start, a key update is performed by providing both the mobile and visitor location register with keys that will be used with encryption algorithms for authentication and communication. The home location register associated with the mobile is located using an identifier such as the mobile's telephone number and the AKEY value stored in the home location register is used to produce the data that will be transmitted to the visitor location register. The values calculated are the SSDA (Shared Secret Data A) and SSDB (Shared Secret Data B) values. These values are calculated by performing the CAVE algorithm using a random number R_{S} as an input and the value AKEY as the key input. The CAVE algorithm is well known in the art and is specified in the IS41 standard. The home authentication center then transfers the values R_{S}, SSDA and SSDB to the visitor location register of the visiting network. The visiting network then updates the shared secret data (SSDA and SSDB) that will be used by the mobile by transmitting R_{S} to the mobile. The mobile then calculates the SSDA and SSDB in the same fashion as calculated by the home authentication center. Now that the mobile and visitor location register both contain the SSDA and SSDB values, the authentication process may take place.

FIG. 3b illustrates how a mobile is authenticated within a visiting network after both the mobile and visiting location register have received the keys SSDA and SSDB. The visiting authentication center challenges the mobile by sending a random number R_{N} to the mobile. At this point both the mobile and visiting authentication center calculate the value AUTHR where AUTHR is equal to the output of the CAVE algorithm using the random number R_{N} as an input and the SSDA value as the key input. The mobile then transmits the calculated value AUTHR to the visiting authentication center. The visiting authentication center compares its calculated value of AUTHR and the value received from the mobile. If the values match, the mobile is authenticated and it is given access to the visiting network. In addition, both the mobile and the visiting authentication center calculate the value of cipher key K_{C} where the value K_{C} is equal to the output of the CAVE algorithm using the value R_{N} as an input and the value SSDB as the key input. At this point, communications between the mobile and visiting network are permitted and may be encrypted using an cryptographic function where the inputs are the message to be encrypted and the key K_{C} . The cryptographic functions are specified CDMA and TDMA systems by their respective standards. It should be noted that with regard to IS41, communications between the visiting authentication center and the home authentication center are only carried out each time the mobile registers with the visiting network as opposed to each time a call is made to the mobile.

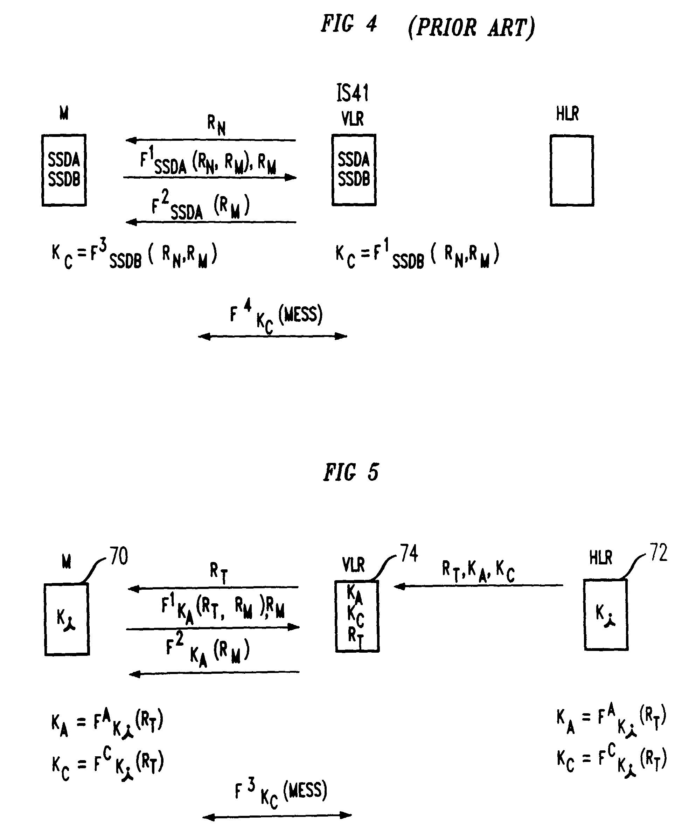

The methods discussed above illustrate a way for verifying that the mobile is authorized to have access to the network, but they do not deal with the mobile verifying that it is being asked to identify itself by a legitimate network. FIG. 4 illustrates a proposal for an improvement to the IS41 standard that allows for mutual authentication between a visiting network and a mobile. FIG. 4 illustrates the process of mutual authentication once both the mobile and visiting location register have received the values SSDA and SSDB as was discussed above with regard to FIG. 3a. The visiting network challenges the mobile by transmitting the random number R_{N}. The mobile then responds by performing a calculation to obtain the output of an cryptographic function F¹ using the values R_{N} and R_{M} as inputs and the value SSDA as a key input. In this case, the R_{N} is the same value that was transmitted by the visiting network and the value R_{M} is a random number calculated by the mobile. In addition to transmitting the output of this cryptographic function, the value R_{M} is also transmitted in unencrypted form to the visiting network. The visiting network calculates the output of the F¹ cryptographic function using the values R_{N} and the unencrypted form of R_{M} as inputs to the F¹ cryptographic function with the value SSDA as a key input. This output value is compared to the value received from the mobile, and if they match, the mobile is verified or authenticated. The visiting network is then authenticated or verified by the mobile by responding to the challenge supplied by the mobile in the form of value R_{M}. The visiting authentication center then transmits the output of the cryptographic function F² using the value R_{M} as an input and the value SSDA as a key input. The mobile then performs the same calculation and compares the value it received from the visiting network with the value it obtained from the output of cryptographic function F² using key value SSDA and value R_{M}. If the values match, the mobile considers the network authenticated or verified and continues to communicate with the network. Both the visiting authentication center and the mobile calculate the value for cipher key K_{C} by obtaining the output of cryptographic function F³. using the values R_{N} and R_{M} as inputs and the value SSDB as a key input. At this point, the mobile and visiting network can communicate; however, if encrypted communications are desired, the messages are encrypted using the encryption algorithm F⁴ with the message to be encrypted as an input and the value K_{C} as a key input. Cryptographic functions F¹, F², and F³ may be hash functions or a one cryptographic function such as SHA-1, and function F⁴ may be a cryptographic function such as DES. Hash functions, one way cryptographic functions such as SHA-1 and cryptographic functions such as DES are well known in the art.

The proposed mutual authentication process suffers from inefficiency in that it requires that both the mobile and the visiting location register have the values SSDA and SSDB before the authentication process may start. As a result, at least two sets of communications are required between the mobile and the visiting authentication center. The first set of communications provide the mobile with information used to calculate values SSDA and SSDB. The second set of communications are used to perform the mutual authentication.

### Summary of the Invention

The present invention provides a more efficient method for performing authentication by using an authentication challenge transmitted to a terminal to provide the terminal with the information to calculate authentication and cipher key values. As a result, a separate communication is not required to provide the terminal with key values, and the inefficiency of the two sets of communications is eliminated. A visiting authentication center obtains a random value R_{T}, an authentication key value K_{A} and a cipher key value K_{C} from a home authentication center. The visiting authentication center then transmits the random number R_{T} to the terminal to update the terminal's authentication key and cipher key values, and to challenge the terminal as part of an authentication process. The terminal uses R_{T} to calculate the authentication key value K_{A} and the cipher key value K_{C}, and to respond to the visiting authentication center's challenge. In addition, the authentication key value is used to verify the visiting network's response to the terminal's authentication challenge to the network.

### Brief Description of the Drawings

FIG. 1 illustrates the communication between a mobile, visiting network, and home network;
FIG. 2 illustrates the authentication process for a GSM network;
FIGS. 3a and 3b illustrate the key update and authentication process for an IS41 compliant network;
FIG. 4 illustrates a proposed mutual authentication method; and
FIG. 5 illustrates a method for performing key updates and mutual authentication.

### Detailed Description

FIG. 5 illustrates a method where a single random value transmitted to a mobile or stationary terminal is used to both update the authentication and cipher key values of the terminal and to provide an authentication challenge to the terminal. Mobile or stationary terminal 70, and home location register 72 share key value Kᵢ. When mobile terminal 70 requests access to a visiting network, the visiting authentication center contacts the home authentication center to obtain the random value R_{T}, authentication key value K_{A} and cipher key value K_{C}. In response to this request, the home authentication center accesses the home location register 72 associated with mobile terminal 70 using an identifier such as a telephone number provided by the mobile terminal via the visiting authentication center. The home authentication center then calculates authentication key value K_{A} by taking the output of cryptographic function F^{A} using random number R_{T} as an input and the value Kᵢ as a key input. Additionally, the home authentication center calculates the cipher key value K_{C} using the output of cryptographic function F^{C} using the value R_{T} as an input and the value Kᵢ as a key input. Once these values are calculated, the home authentication center communicates the values R_{T}, K_{A}, and K_{C} to the visiting authentication center. The visiting authentication center then stores the values K_{A}, K_{C} and R_{T} in the visiting location register associated with mobile terminal 70. The visiting authentication center then communicates the value R_{T} to mobile terminal 70 as both an authentication challenge and as a value that will be used to update the authentication and cipher key values used by the mobile terminal. The mobile terminal uses the value R_{T} received from the visiting authentication center to calculate the authentication key value K_{A} and the cipher key value K_{C} in the same fashion as the values were calculated by the home authentication center. The mobile terminal then uses the authentication key value K_{A} to respond to the visiting aúthentication center's authentication challenge. The mobile terminal determines the output of cryptographic function F¹ using the values R_{T} and R_{M} as inputs and the authentication key value K_{A} as a key input; however, it is also possible to use the value R_{T} rather than both R_{T} and R_{M} as inputs. The output of the cryptographic function F¹ and the value R_{M} are communicated to the visiting authentication center; however the value R_{M} may not be transmitted if R_{M} was not used as an input for cryptographic function F¹ and if authentication of the network is not required. The value R_{M} is a random value chosen by the mobile terminal. The visiting authentication center also calculates the value of the output of function F¹ with inputs R_{T} and R_{M}, and key input value K_{A} so that the result can be compared with the value communicated by the mobile terminal. If the values match, the mobile terminal is then authenticated or verified to the visiting network. The value R_{M} provided by the mobile terminal is used as an authentication challenge to the visiting network by mobile 70. The visiting network calculates the output of function F² using the value R_{M} as an input and the value K_{A} as a key input. This output value is then communicated to the mobile terminal where the terminal independently determines the output of function F² with the value R_{M} as an input and the value K_{A} as a key input. If the output values match, the mobile terminal then verifies or authenticates the visiting network. Once both the mobile terminal and visiting network have authenticated or verified each other's identities, communication may continue. The communication may pass using unencrypted messages or encrypted messages. If encrypted messages are used, the messages are encrypted by using the output of cryptographic function F² with the message as an input and the cipher value K_{C} as a key input. This process may be carried out each time a call is attempted between the mobile terminal and visiting network. It is also possible to contact the home authentication center each time the mobile registers with a visiting network rather than each time a call is attempted, and to use the same values of K_{A}, K_{C} and R_{T} as long as the mobile remains registered with the visiting network. Cryptographic functions F¹, F², F^{A} and F^{C} may be hash functions or a one cryptographic function such as SHA-1, and function F³ may be a cryptographic function such as DES. Hash functions, one way cryptographic functions such as SHA-1 and cryptographic functions such as DES are well known in the art.

It is also possible to carry out the same procedure when the mobile terminal is in the home network. In this case, the home authentication center, rather than the visiting authentication center, communicates with the mobile terminal. In a wireless network, the communications between the terminal and authentication center pass through a wireless base station.

## Claims

1. An authentication method, comprising the steps of:
transmitting a first value to a terminal;
receiving a response from the terminal having at least a first response value, where the first response value is at least part of an output of a first cryptographic function using at least a first portion of the first value as an input and a first key value as a key input, the first key value being at least a portion of an output of a second cryptographic function using at least a second portion of the first value as an input and a second key value as a key input; and
verifying the first response value is equal to an expected first response value.

2. The method of claim 1, wherein the response has a second response value and further comprising the step of transmitting a second value to the terminal, where the second value is at least a portion of an output of a third cryptographic function using at least a portion of the second response value as an input and a third key value as a key input.

3. An authentication method, comprising the steps of:
transmitting a first value to a terminal;
receiving a response from the terminal having at least a first response value and a second response value, where the first response value is at least part of an output of a first cryptographic function using at least a first portion of the first value and at least a first portion of the second response value as inputs and a first key value as a key input, the first key value being at least a portion of an output of a second cryptographic function using at least a second portion of the first value as an input and a second key value as a key input; and
verifying that the first response value is equal to an expected first response value.

4. The method of claim 1 or claim 3, wherein the second key value is associated with the terminal.

5. The method of claim 3, further comprising the step of transmitting a second value to the terminal, where the second value is at least a portion of an output of a third cryptographic function using at least a second portion of the second response value as an input and a third key value as a key input.

6. An authentication method, comprising the steps of:
receiving a first value; and
transmitting a response having at least a first response value, where the first response value is at least part of an output of a first cryptographic function using at least a first portion of the first value as an input and a first key value as a key input, the first key value being at least a portion of an output of a second cryptographic function using at least a second portion of the first value as an input and a second key value as a key input.

7. The method of claim 6, wherein the response has a second response value and further comprising the step of receiving a second value, where the second value is at least a portion of an output of a third cryptographic function using at least a portion of the second response value as an input and a third key value as a key input.

8. The method of claim 7, further comprising the step of verifying the second value is equal to an expected second value.

9. An authentication method, comprising the steps of:
receiving a first value; and
transmitting a response having at least a first response value and a second response value, where the first response value is at least part of an output of a first cryptographic function using at least a first portion of the first value and at least a first portion of the second response value as inputs and a first key value as a key input, the first key value being at least a portion of an output of a second cryptographic function using at least a second portion of the first value as an input and a second key value as a key input.

10. The method of any of claims 1,3,6 or 9 wherein the first and second cryptographic functions are the same.

11. The method of any of claims 1,3,6 or 9 wherein the first and second portions of the first value are the same.

12. The method of claim 9, further comprising the step of receiving a second value, where the second value is at least a portion of an output of a third cryptographic function using at least a portion of the second response value as an input and a third key value as a key input.

13. The method of claim 12, further comprising the step of verifying the second value is equal to an expected second value.
